# EUROPÄISCHE PATENTSCHRIFT

(11) **EP 1 531 074 B1**
(45) Veröffentlichungstag und Bekanntmachung des Hinweises auf die Patenterteilung: **26.12.2012**
(21) Anmeldenummer: 04017285.0
(22) Anmeldetag: 22.07.2004
(51) Int. Cl.: B60K 6/20

(54) **Hybridfahrzeug mit Geschwindigkeitsregler**
Hybrid vehicle with cruise control system
Véhicule hybride avec régulateur de vitesse

(30) Priorität: 12.11.2003 DE 10352799
(43) Veröffentlichungstag der Anmeldung: 18.05.2005
(73) Patentinhaber: ROBERT BOSCH GMBH, 70442 Stuttgart (DE)
(72) Erfinder: Hellmann, Manfred, 71706 Hardthof (DE)

(56) Entgegenhaltungen:
- EP-A- 0 899 151
- EP-A1- 1 004 761
- WO-A1-03/051663
- DE-A1- 10 232 805

## Beschreibung

### Stand der Technik

Die Erfindung betrifft ein Hybridfahrzeug mit einem Geschwindigkeitsregler für ein Kraftfahrzeug, das im Antriebszug eine Brennkraftmaschine aufweist, deren Ausgangsdrehmoment in Abhängigkeit von einem durch den Geschwindigkeitsregler bestimmten Solldrehmoment steuerbar ist und eine Momentenlücke zwischen dem Mindest-Drehmoment und dem Schleppmoment des Motors aufweist, das sich bei vollständig abgeschalteter Kraftstoffeinspritzung im Schiebebetrieb ergibt, und das weiterhin einen in den Antriebszug koppelbaren Wandler aufweist, wobei der Geschwindigkeitsregler ein Wandlermodul enthält, das dazu ausgebildet ist, in Abhängigkeit von einer Differenz zwischen dem Solldrehmoment und dem von der Brennkraftmaschine erzeugbaren Ausgangsdrehmoment ein Zusatzdrehmoment über den Wandler in den Antriebszug einzukoppeln, und wobei der Wandler an eine Batterie angeschlossen und sowohl als Elektromotor wie auch als Generator betreibbar ist und der Geschwindigkeitsregler dazu ausgebildet ist, zwischen Motorbetrieb und Generatorbetrieb des Wandlers zu wechseln.

In Kraftfahrzeugen dienen Geschwindigkeitsregler dazu, durch Eingriff in das Steuersystem der Brennkraftmaschine die jeweils gewünschte Geschwindigkeit des Fahrzeugs einzustellen. Der Geschwindigkeitsregler kann auch Teil eines geschlossenen Regelkreises sein, mit dem die Geschwindigkeit automatisch auf eine vom Fahrer gewählte Wunschgeschwindigkeit geregelt wird. Weiterhin kann der Geschwindigkeitsregler auch Teil eines sogenannten ACC-Systems (Adaptive Cruise Control) sein, bei dem vorausfahrende Fahrzeuge mit Hilfe eines Ortungssystems, beispielsweise mit Hilfe eines Radarsensors, geortet werden und dann die Geschwindigkeit des eigenen Fahrzeugs automatisch an das Verkehrsumfeld angepaßt wird, so daß z.B. ein unmittelbar voraus fahrendes Fahrzeug in einem geeigneten Sicherheitsabstand verfolgt werden kann. In diesem Fall greift der Geschwindigkeitsregler zumeist nicht nur in das Antriebssystem, sondern auch in das Bremssystem des Fahrzeugs ein.

Generell bestimmt der Geschwindigkeitsregler eine Sollbeschleunigung, die erforderlich ist, um die jeweils aktuelle Sollgeschwindigkeit des Fahrzeugs zu erreichen oder wiederherzustellen. Bei Eingriffen in das Antriebssystem entspricht dieser Sollbeschleunigung jeweils ein bestimmtes Solldrehmoment des Motors, das über die Massenträgheit des Fahrzeugs und über das Übersetzungsverhältnis des Getriebes mit der Sollbeschleunigung zusammenhängt. Störeinflüsse wie unterschiedliche Fahrzeugzuladungen, Fahrbahnsteigungen, Gegenwind und dergleichen können im Rahmen der Regelung in einem geschlossenen Regelkreis ausgeregelt werden. Auf der Grundlage des jeweils erforderlichen Solldrehmoments übermittelt der Geschwindigkeitsregler beispielsweise über einen fahrzeugeigenen Datenbus (CAN-Bus) einen entsprechenden Befehl an die elektronische Motorsteuerung, die daraufhin z.B. die Kraftstoff-Einspritzmenge und dergleichen so einstellt, daß der Motor das geforderte Drehmoment bereitstellt.

In einigen Fällen, insbesondere bei Fahrzeugen mit Otto-Motor, kann es jedoch vorkommen, daß der Geschwindigkeitsregler ein Solldrehmoment verlangt, das sich aufgrund systembedingter Beschränkungen nicht realisieren läßt. Eine solche Beschränkung besteht bei Otto-Motoren z.B. darin, daß eine bestimmte Mindesteinspritzmenge an Kraftstoff nicht unterschritten werden darf, damit eine saubere Verbrennung gewährleistet wird. Da dieser Mindesteinspritzmenge auch ein gewisses Mindest-Drehmoment entspricht, entsteht eine sogenannte Momentenlücke zwischen dem Mindest-Drehmoment und dem Schleppmoment des Motors, das sich bei vollständig abgeschalteter Kraftstoffeinspritzung im Schiebebetrieb ergibt. Wenn das vom Geschwindigkeitsregler geforderte Solldrehmoment in dieser Momentenlücke liegt, so kann das Solldrehmoment nur im zeitlichen Mittel realisiert werden, indem die Motorsteuerung periodisch zwischen Drehmomenten oberhalb und unterhalb der Momentenlücke umschaltet. Dies führt zu einem ungleichmäßigen Beschleunigungsverhalten des Fahrzeugs (Ruckeln), und somit zu einer Komforteinbuße.

Für Fahrzeuge mit Automatikgetriebe ist bereits vorgeschlagen worden, diesen Effekt durch einen automatischen Wechsel der Getriebestufe zu mildern. Dabei macht man sich den Umstand zunutze, daß die Momentenlücke des Motors durch das Übersetzungsverhältnis des Getriebes in einen anderen Drehmomentbereich verschoben wird. Man wählt deshalb die Getriebestufe nach Möglichkeit so, daß das von der Getriebeübersetzung abhängige Solldrehmoment des Motors außerhalb der Momentenlücke liegt. Da jedoch in der Regel die zu verschiedenen Getriebestufen gehörenden Momentenlücken einander überlappen, kann auf diese Weise die effektive Momentenlücke oft nur verkleinert aber nicht ganz geschlossen werden.

Aus der WO 03/051663 ist eine Vorrichtung und ein damit realisierbares Verfahren zur Regelung der Fahrgeschwindigkeit eines mindestens eine mit einem Antriebsstrang für mindestens ein Rad gekoppelte beziehungsweise koppelbare elektrische Maschine aufweisenden Fahrzeugs in Abhängigkeit wenigstens von dessen Ist- und Sollgeschwindigkeit vorgeschlagen, wobei die Vorrichtung eine Steuereinheit zur Steuerung des Drehmoments der elektrischen Maschine, Mittel zur Ansteuerung der elektrischen Maschine, Mittel zur Erfassung der Istgeschwindigkeit des Fahrzeugs sowie Mittel zur Vorgabe der Sollgeschwindigkeit des Fahrzeugs aufweist. Die Vorrichtung zeichnet sich dadurch aus, dass die elektrische Maschine sowohl im generatorischen Betrieb zur Erzeugung eines Bremsmoments als auch im motorischen Betrieb zur Erzeugung eines Antriebsmoments einsetzbar ist.

Aus der EP 1 004 761 A1 ist eine Vorrichtung zum Steuern/Regeln eines Hybridfahrzeugs, welches eine Brennkraftmaschine und einen Elektromotor als Antriebsquellen für das Fahrzeug aufweist, bekannt, bei dem ein Luft-Kraftstoff- Verhältnis eines Luft-Kraftstoff-Gemisches, das der Maschine zugeführt wird, gemäß dem Fahrzustand des Fahrzeugs gesteuert bzw. geregelt wird. Wenn zum Beispiel der Fahrzustand ein Konstantverbrauch-Fahren anzeigt, wird ein Soll-Luft-Kraftstoff-Verhältnis zu einem mageren Luft-Kraftstoff-Verhältnis gesetzt, um die Reichweite zu verbessern, und eine Magerverbrennungs-Steuerung/Regelung wird durchgeführt. Bei einem Fahrzustand, bei dem eine erhöhte Motorleistung benötigt wird, wird ein Soll-Luft-Kraftstoff-Verhältnis auf ein stöchiometrisches Luft-Kraftstoff-Verhältnis gesetzt, und eine stöchiometrische Verbrennungs-Steuerung/Regelung durchgeführt. Damit wird eine Steuer-/Regelvorrichtung für ein Hybridfahrzeug bereitgestellt, das eine Ausgabedrehmomentdifferenz einer Maschine zu dem Zeitpunkt einer plötzlichen Änderung eines Luft-Kraftstoff-Verhältnisses eines Zufuhr-Luft-Kraftstoff-Gemisches ohne eine Zeitverzögerung ausreichend kompensieren kann.

### Vorteile der Erfindung

Aufgabe der Erfindung ist es, ein Hybridfahrzeug zu schaffen, bei dem die nachteiligen Auswirkungen der Momentenlücke des Motors weiter minimiert werden.

Diese Aufgabe wird erfindungsgemäß mit den in Anspruch 1 angegebenen Merkmalen gelöst. Vorteilhafte Ausgestaltungen und Weiterbildungen der Erfindung ergeben sich aus den Unteransprüchen.

Der Wandler kann durch eine mechanische Kupplung lösbar mit dem Antriebszug verbunden sein und lediglich bei Bedarf eingekuppelt werden. Wahlweise kann der Rotor des Wandlers jedoch auch ständig in den Antriebszug geschaltet sein, und die verschiedenen Betriebsarten des Wandlers, Motorbetrieb, Generatorbetrieb oder Leerlauf, werden je nach Bedarf durch entsprechende elektrische Beschaltung des Wandlers realisiert. In einer besonders bevorzugten Ausführungsform ist der Wandler ein sogenannter Kurbelwellen-Starter/Generator (KSG), der direkt mit der Kurbelwelle des Motors gekoppelt ist.

Um beim Motorbetrieb des Wandlers eine zu starke Entladung der Batterie zu vermeiden, kann periodisch zwischen Motorbetrieb und Generatorbetrieb gewechselt werden. Vorzugsweise erfolgt dieser Wechsel in Abhängigkeit vom Ladezustand der Batterie.

Wahlweise kann der Wandler im Generatorbetrieb auch dazu genutzt werden, bei einer negativen Sollbeschleunigung des Fahrzeugs ein zusätzliches negatives Drehmoment zu erzeugen, so daß beispielsweise auf Gefällstrecken oder bei der Anpassung der Fahrzeuggeschwindigkeit an die Geschwindigkeit eines langsameren vorausfahrenden Fahrzeugs, weniger häufig in das Bremssystem des Fahrzeugs eingegriffen werden muß und somit der Bremsenverschleiß reduziert wird.

Zusätzlich zu dem Wandlermodul kann der erfindungsgemäße Geschwindigkeitsregler auch ein Getriebemodul aufweisen, mit dem in bekannter Weise durch Wechsel der Getriebestufe die Momentenlücke minimiert wird. Durch Zuschalten des Wandlers kann dann die verbleibende Momentenlücke ganz geschlossen werden. Diese Ausführungsform hat den Vorteil, daß der Wandler nur seltener zugeschaltet zu werden braucht und somit auch die Häufigkeit und das Ausmaß von Entlade- und Ladevorgängen der Batterie reduziert wird.

Die Erfindung kann vorteilhaft auch in den Fällen eingesetzt werden, in denen das Solldrehmoment vom Fahrer über das Gaspedal bestimmt wird. Auch in diesen Fällen kann durch Zuschalten des Wandlers die Momentenlücke des Motors überbrückt werden, falls das mit Hilfe des Gaspedals bestimmte Solldrehmoment in der Momentenlücke liegt. So wird auch bei einer Geschwindigkeitsregelung oder -steuerung über das Gaspedal der Fahrkomfort erhöht. Der Begriff "Geschwindigkeitsregler" im Sinne dieser Erfindung ist deshalb nicht auf Systeme beschränkt, bei denen im eigentlichen Sinne eine Regelung der Geschwindigkeit in einem geschlossenen Regelkreis stattfindet, sondern bezieht sich allgemein auf Geräte, mit denen Befehle, die ein bestimmtes Solldrehmoment repräsentieren, für das Steuersystem der Brennkraftmaschine bereitgestellt werden.

### Zeichnung

Ein Ausführungsbeispiel der Erfindung ist in den Zeichnungen dargestellt und in der nachfolgenden Beschreibung näher erläutert.

Es zeigen:
- Fig. 1: ein Blockdiagramm eines erfindungsgemäßen Geschwindigkeitsreglers in Verbindung mit einem Antriebszug eines Kraftfahrzeugs; und
- Fig. 2A bis D: Diagramme zur Erläuterung der Arbeitsweise des Geschwindigkeitsreglers.

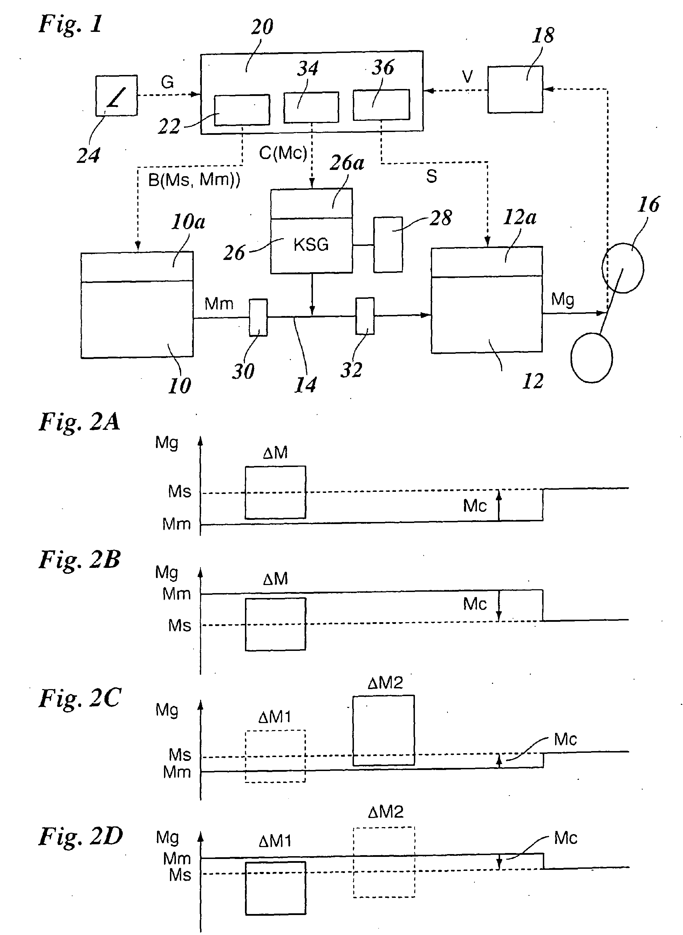

In Figur 1 ist als Blockdiagramm ein Antriebszug eines Kraftfahrzeugs dargestellt, mit einer Brennkraftmaschine 10, im folgenden kurz als Motor bezeichnet, und einem automatischem Getriebe 12, das über eine Motorwelle 14 das Ausgangsdrehmoment Mm des Motors 10 aufnimmt und nach entsprechender Getriebeübersetzung ein Getriebe-Ausgangsdrehmoment Mg auf die Antriebsräder 16 des Fahrzeugs überträgt. Die Istgeschwindigkeit V des Fahrzeugs wird von einem Geschwindigkeitssensor 18 gemessen und an einen Geschwindigkeitsregler 20 übermittelt. Der Geschwindigkeitsregler 20 weist ein Ausgabemodul 22 auf, das, abhängig von der Getriebestufe, ein Befehlssignal B erzeugt und an eine dem Motor 10 zugeordnete Motorsteuerung 10a übermittelt, die beispielsweise über die Kraftstoff-Einspritzmenge das Ausgangsdrehmoment Mm des Motors 10 steuert. Auf diese Weise wird ein geschlossener Regelkreis zur Regelung der Fahrzeuggeschwindigkeit gebildet.

Der Geschwindigkeitsregler 20 wird beispielsweise durch einen Mikrocomputer gebildet und kann z.B. dazu dienen, die Geschwindigkeit des Fahrzeugs auf eine vom Fahrer gewählte Wunschgeschwindigkeit zu regeln. Ebenso kann der Geschwindigkeitsregler 20 jedoch auch Teil eines ACC-Systems ein, zu dem auch ein Radarsensor zur Ortung von vorausfahrenden Fahrzeugen gehört und das es ermöglicht, die Geschwindigkeit des eigenen Fahrzeugs automatisch an die des vorausfahrenden Fahrzeugs anzupassen.

Im gezeigten Beispiel nimmt der Geschwindigkeitsregler 20 darüber hinaus noch ein Signal G eines Gaspedalfühlers 24 auf. Wenn die ACC-Funktion abgeschaltet ist und die Geschwindigkeit des Fahrzeugs durch den Fahrer über das Gaspedal gesteuert wird, berechnet der Geschwindigkeitsregler 20 das Solldrehmoment Ms anhand des vom Gaspedalfühler 24 gelieferten Signals G.

An die Motorwelle 14 ist ein elektromechanischer Wandler 26 gekoppelt, der beispielsweise durch einen Kurbelwellen-Starter/Generator (KSG) gebildet wird und dem eine elektronische Wandler-Steuerung 26a zugeordnet ist. Der Wandler ist elektrisch mit einer Batterie 28 verbunden.

Im Antriebszug zwischen dem Motor 10 und dem Getriebe 12 ist je eine Kupplung 30, 32 stromaufwärts und stromabwärts der Ankopplungsstelle des Wandlers 26 vorgesehen, so daß der Wandler 26 wahlweise mit dem Motor 10 und/oder dem Getriebe 12 gekoppelt werden kann. Zum Starten des Motors 10 wird der Wandler als Motor betrieben, so daß er über die Kupplung 30 die Kurbelwelle des Motors 10 antreibt, um diesen anzulassen, während die Kupplung 32 gelöst ist. Bei laufendem Motor 10 kann der Wandler 26 als Generator betrieben werden, um die Batterie 28 aufzuladen.

Der Geschwindigkeitsregler 20 weist neben dem Ausgabemodul 22 ein Wandlermodul 34 sowie ein Getriebemodul 36 auf. Über das Wandlermodul 34 kann ein Kompensationsbefehl C, der ein Zusatzdrehmoment Mc repräsentiert, an die Wandler-Steuerung 26a ausgegeben werden. Über das Getriebemodul 36 können Schaltbefehle S zum Umschalten der Getriebestufe an eine Getriebesteuerung 12a ausgegeben werden, die dem Getriebe 12 zugeordnet ist.

Zur Erläuterung der Arbeitsweise des Geschwindigkeitsreglers 20 soll angenommen werden, daß der Motor 10, beispielsweise ein Ottomotor, in einem bestimmten Drehmomentbereich eine sogenannte Momentenlücke aufweist, d.h., ein Intervall von Drehmomenten, die sich mit keiner zulässigen Einstellung der Kraftstoffeinspritzung realisieren lassen. Typischerweise handelt es sich bei einer solchen Momentenlücke um ein Intervall in der Nähe des Drehmoments 0. Der vom Ausgangsmodul 22 des Geschwindigkeitsreglers an die Motorsteuerung 10a übermittelte Drehmomentbefehl B repräsentiert normalerweise das Solldrehmoment Ms, das erforderlich ist, um die Geschwindigkeit des Fahrzeugs auf dem jeweiligen Sollwert zu halten oder auf diesen Sollwert zurückzuführen. Wenn jedoch dieses Solldrehmoment Ms innerhalb der Momentenlücke liegt, muß der Drehmomentbefehl B so modifiziert werden, daß er entweder ein Drehmoment Mm unterhalb dieser Lücke oder oberhalb dieser Lücke repräsentiert. Ohne weitere Gegenmaßnahmen hätte dies zur Folge, daß das Fahrzeug abwechselnd zu stark beschleunigt und zu wenig beschleunigt oder (wegen des negativen Schleppmoments des Motors 10) verzögert. Dies führt zu einem unruhigen, als unkomfortabel empfundenen Beschleunigungsverhalten des Fahrzeugs.

In diesen Fällen wird der Wandler 26 dazu benutzt, ein Zusatzdrehmoment Mc in den Antriebszug einzuspeisen, durch den die Differenz zwischen dem Drehmomentbefehl B (Drehmoment Mm) und dem eigentlich erforderlichen Solldrehmoment Ms gerade ausgeglichen wird. Dieses Zusatzdrehmoment kann positiv oder negativ sein, entsprechend einem Motorbetrieb oder Generatorbetrieb des Wandlers 26. Betrag und Vorzeichen des Zusatzdrehmoments Mc werden durch den Kompensationsbefehl C angegeben, der vom Wandlermodul 34 an die Wandler-Steuerung 26a übermittelt wird.

Während des Motorbetriebs des Wandlers 26 kann wahlweise die Kupplung 30 gelöst werden, so daß der Motor 10 vom Antriebszug getrennt wird. Die Motorwelle 14 wird dann allein durch den Wandler 26 angetrieben und wird nicht durch den Motor 10 gebremst, falls dieser bei abgeschalteter Kraftstoffeinspritzung ein negatives Drehmoment liefert. Im folgenden soll jedoch zur Vereinfachung von der Beispielsituation ausgegangen werden, daß die Kupplung 30 auch beim Motorbetrieb des Wandlers eingerückt bleibt.

In Figur 2A ist in einem Diagramm die Situation dargestellt, daß das Solldrehmoment Ms in der Momentenlücke ΔM liegt, während der Drehmomentbefehl B einem Wert Mm unmittelbar unterhalb dieser Momentenlücke entspricht. Auf der senkrechten Achse ist hier das Getriebe-Ausgangsdrehmoment Mg aufgetragen, das mittelbar, über das Übersetzungsverhältnis des Getriebes, auch das Ausgangsdrehmoment Mm des Motors 10 repräsentiert. Alle Drehmomentwerte sind dementsprechend auf das Getriebe-Ausgangsdrehmoment umgerechnet. Die Momentenlücke ΔM ist als Rechteck dargestellt, dessen Höhe das Intervall der nicht realisierbaren Drehmomentwerte angibt. Der Wandler 26 arbeitet im Motorbetrieb und speist ein positives Zusatzdrehmoment Mc in den Antriebszug ein. Der Betrag dieses Zusatzdrehmoments Mc entspricht der Differenz zwischen Ms und B, so daß das letztlich am Ausgang des Getriebes 12 erhaltene Drehmoment dem Sollwert entspricht.

Figur 2B illustriert den umgekehrten Fall, daß das durch den Drehmomentbefehl B angegebene Drehmoment Mm knapp oberhalb der Momentenlücke ΔM liegt. Die Differenz zwischen Mm und Ms wird hier durch ein negatives Zusatzdrehmoment Mc kompensiert, d.h., der Wandler 26 arbeitet im Generatorbetrieb.

Da die Batterie 28 bei Motorbetrieb des Wandlers 26 entladen wird, bei Generatorbetrieb hingegen aufgeladen wird, ist es zweckmäßig, zwischen den in Figuren 2A und 2B illustrierten Kompensationsmethoden abzuwechseln, vorzugsweise in Abhängigkeit vom Ladezustand der Batterie 28. Sofern der Ladezustand der Batterie es zuläßt, kann die Entscheidung auch davon abhängig gemacht werden, ob das Solldrehmoment Ms in der oberen Hälfte oder in der unteren Hälfte der Momentenlücke ΔM liegt, so daß das vom Wandler 26 aufzubringende Zusatzdrehmoment Mc dem Betrage nach möglichst klein gehalten wird.

Es versteht sich, daß der Wandler 26 auch im Normalbetrieb, d.h., wenn weder ein positives noch ein negatives Zusatzdrehmoment Mc erforderlich ist, als Generator arbeiten kann, um die Batterie 28 aufzuladen oder den Stromverbrauch anderer elektrischer Verbraucher zu ersetzen. Das dafür vom Wandler benötigte Drehmoment ist jedoch bereits im Solldrehmoment Ms enthalten und tritt deshalb in den Diagrammen in Figuren 2A und 2B nicht in Erscheinung. Das negative Zusatzdrehmoment Mc im Fall der Figur 2B läßt sich dann dadurch erreichen, daß die Leistung des Wandlers 26 vorübergehend erhöht wird. Erforderlichenfalls, z.B. wenn die Batterie 29 bereits maximal aufgeladen ist und keine weitere Energie abnimmt, kann die vom Wandler 26 erzeugte Lösung auch einfach vernichtet oder zur elektrischen Zusatzbeheizung des Fahrzeugs genutzt werden.

Sofern der Motor 10 auch das Drehmoment für weitere Verbraucher bereitstellen muß, beispielsweise für den Kompressor einer Klimaanlage, so ist der Drehmomentbedarf dieser weiteren Verbraucher ebenfalls in das Solldrehmoment Ms einzurechnen. Wahlweise können diese weiteren Verbraucher jedoch auch ergänzend zu dem Wandler 26 oder an dessen Stelle dazu benutzt werden, das negative Zusatzdrehmoment Mc zu erzeugen.

Wenn, wie in Figuren 2A-D, die Drehmomentwerte durch das Getriebe-Ausgangsdrehmoment Mg angegeben werden, so ist die Lage der Momentenlücke vom Übersetzungsverhältnis des Getriebes 12 abhängig, da sämtliche Drehmomentwerte mit einem Faktor multipliziert sind, der dem (Drehmoment-)Übersetzungsverhältnis entspricht. Figuren 2C und 2D zeigen jeweils zwei Momentenlücken ⊗M1, ⊗M2. Die Momentenlücke ⊗M2 entspricht einer kleineren Getriebestufe als die Momentenlücke ΔM1, und ihre oberen und unteren Grenzen sind demgemäß mit einem größeren Faktor multipliziert. In Figur 2C liegt das Solldrehmoment Ms in der Nähe der unteren Grenze der Momentenlücke ΔM2. Das Getriebemodul 36 des Geschwindigkeitsreglers 20 veranlaßt deshalb durch den Befehl S eine Umschaltung des Getriebes auf die Getriebestufe, die der Momentenlücke ΔM2 entspricht, und der über das Ausgabemodul 22 ausgegebene Drehmomentbefehl B entspricht einem Drehmoment unmittelbar unterhalb dieser Momentenlücke. Folglich braucht der Wandler 26 nur ein kleines positives Zusatzdrehmoment Mc aufzubringen.

In Figur 2D ist das Solldrehmoment Ms etwas größer und liegt nun in der Nähe der oberen Grenze der Momentenlücke ΔM1. Deshalb wird in diesem Fall die Getriebestufe gewählt, die der Momentenlücke ΔM1 zugeordnet ist, und der ausgegebene Drehmomentbefehl B entspricht einem Drehmoment Mm unmittelbar oberhalb der oberen Grenze dieser Momentenlücke. Der Wandler 26 braucht dann auch hier nur ein dem Betrage nach sehr kleines negatives Zusatzdrehmoment Mc zu erzeugen.

## Patentansprüche

1. Hybridfahrzeug mit einem Geschwindigkeitsregler für ein Kraftfahrzeug, das im Antriebszug eine Brennkraftmaschine (10) aufweist, deren Ausgangsdrehmoment (Mm) in Abhängigkeit von einem durch den Geschwindigkeitsregler (20) bestimmten Solldrehmoment (Ms) steuerbar ist, und eine Momentenlücke (ΔM) aufweist, zwischen dem Mindest-Drehmoment und dem Schleppmoment des Motors, das sich bei vollständig abgeschalteter Kraftstoffeinspritzung im Schiebebetrieb ergibt, und das weiterhin einen in den Antriebszug koppelbaren Wandler (26) aufweist, wobei der Geschwindigkeitsregler (20) ein Wandlermodul (34) enthält, das dazu ausgebildet ist, in Abhängigkeit von einer Differenz zwischen dem Solldrehmoment (Ms) und dem von der Brennkraftmaschine (10) erzeugbaren Ausgangsdrehmoment (Mm) ein Zusatzdrehmoment (Mc) über den Wandler (26) in den Antriebszug einzukoppeln, wobei der Wandler (26) an eine Batterie (28) angeschlossen und sowohl als Elektromotor wie auch als Generator betreibbar ist und der Geschwindigkeitsregler (20) dazu ausgebildet ist, zwischen Motorbetrieb und Generatorbetrieb des Wandlers (26) zu wechseln, **dadurch gekennzeichnet, daß** wenn das Solldrehmoment (Ms) innerhalb der Momentenlücke (ΔM) liegt, der Geschwindigkeitsregler (20) den Wechsel zwischen Motorbetrieb und Generatorbetrieb des Wandlers (26) in Abhängigkeit vom Ladezustand der Batterie (28) vornimmt, indem der Geschwindigkeitsregler (20) den Wandler zur Einspeisung eines positiven Zusatzdrehmoments (Mc) in den Antriebszug veranlasst und ein Ausgangsdrehmoment (Mm) unmittelbar unterhalb der Momentenlücke (ΔM) wählt oder ein Ausgangsdrehmoment (Mm) unmittelbar oberhalb der Momentenlücke (ΔM) wählt und den Wandler (26) dazu veranlasst, ein negatives Zusatzdrehmoment in den Antriebszug einzukoppeln.

2. Hybridfahrzeug mit einem Geschwindigkeitsregler nach Anspruch 1, **dadurch gekennzeichnet, daß** das Wandlermodul (34) zur Steuerung eines elektromechanischen Wandlers (26) ausgebildet ist.

3. Hybridfahrzeug mit einem Geschwindigkeitsregler nach einem der vorstehenden Ansprüche für Kraftfahrzeuge mit einem automatischen Getriebe (12), **dadurch gekennzeichnet, daß** der Geschwindigkeitsregler (20) ein Getriebemodul (36) zur Umschaltung des Übersetzungsverhältnisses des Getriebes (12) in Abhängigkeit von der Differenz zwischen dem Solldrehmoment (Ms) und dem von der Brennkraftmaschine (10) erzeugbaren Ausgangsdrehmoment (Mm) aufweist.

4. Hybridfahrzeug mit einem Geschwindigkeitsregler nach einem der vorstehenden Ansprüche, **dadurch gekennzeichnet, daß** der Geschwindigkeitsregler (20) dazu ausgebildet ist, das Solldrehmoment (Ms) in Abhängigkeit von einem Signal (G) eines Gaspedalfühlers (24) zu bestimmen.

## Claims

1. Hybrid vehicle having a cruise control system for a motor vehicle, which hybrid vehicle has in the drive train an internal combustion engine (10) whose output torque (Mm) can be controlled as a function of a setpoint torque (Ms) which is determined by the cruise control system (20), and has a torque gap (ΔM) between the minimum torque and the drag torque of the engine which occurs when the fuel injection is completely switched off in the overrun mode, and which hybrid vehicle also has a converter (26) which can be coupled into the drive train, wherein the cruise control system (20) has a converter module (34) which is designed to couple an additional torque (Mc) into the drive train via the converter (26) as a function of a difference between the setpoint torque (Ms) and the output torque (Mm) which can be generated by the internal combustion engine (10), wherein the converter (26) is connected to a battery (28) and can be operated both as an electric motor and as a generator, and the cruise control system (20) is designed to change between the engine mode and the generator mode of the converter (26), **characterized in that** if the setpoint torque (Ms) is within the torque gap (ΔM), the cruise control system (20) performs the changeover between the engine mode and the generator mode of the converter (26) as a function of the state of charge of the battery (28) **in that** the cruise control system (20) causes the converter to feed a positive additional torque (Mc) into the drive train and selects an output torque (Mm) directly below the torque gap (ΔM) or selects an output torque (Mm) directly above the torque gap (ΔM) and causes the converter (26) to couple a negative additional torque into the drive train.

2. Hybrid vehicle having a cruise control system according to Claim 1, **characterized in that** the converter module (34) is designed to control an electromechanical converter (26).

3. Hybrid vehicle having a cruise control system according to one of the preceding claims for motor vehicles having an automatic gearbox (12), **characterized in that** the cruise control system (20) has a gearbox module (36) for switching over the transmission ratio of the gearbox (12) as a function of the difference between the setpoint torque (Ms) and the output torque (Mm) which can be generated by the internal combustion engine (10).

4. Hybrid vehicle having a cruise control system according to one of the preceding claims, **characterized in that** the cruise control system (20) is designed to determine the setpoint torque (Ms) as a function of a signal (G) of an accelerator pedal sensor (24).

## Revendications

1. Véhicule hybride présentant
un régulateur de vitesse de véhicule automobile et
dans le train d'entraînement un moteur (10) à combustion interne dont le couple de rotation de sortie (Mm) peut être commandé en fonction d'un couple de rotation de consigne (Ms) défini par le régulateur de vitesse (20) et qui présente un intervalle de couple (ΔM) entre le couple de rotation minimum et le couple de patinage du moteur qui résulte de l'arrêt complet de l'injection de carburant en situation de poussée,
avec en outre un convertisseur (26) qui peut être raccordé dans le train d'entraînement,
le régulateur de vitesse (20) contenant un module de convertisseur (34) configuré pour appliquer dans le train d'entraînement un couple de rotation supplémentaire (Mc) par l'intermédiaire du convertisseur (26) en fonction de la différence entre le couple de rotation de consigne (Ms) et le couple de rotation de sortie (Mm) qui peut être délivré par le moteur (10) à combustion interne,
le convertisseur (26) étant raccordé à une batterie (28) et pouvant fonctionner aussi bien comme moteur électrique que comme générateur,
le régulateur de vitesse (20) étant configuré pour faire alterner le fonctionnement en moteur et le fonctionnement en générateur du convertisseur (26), **caractérisé en ce que**
lorsque le couple de rotation de consigne (Ms) est situé à l'intérieur de l'intervalle de couple (ΔM), le régulateur de vitesse (20) assure l'alternance entre le fonctionnement en moteur et le fonctionnement en générateur de convertisseur (26) en fonction de l'état de charge de la batterie (28) par le fait que le régulateur de vitesse (20) amène le convertisseur à appliquer un couple de rotation supplémentaire positif (Mc) dans le train d'entraînement et sélectionne
un couple de rotation de sortie (Mm) situé immédiatement en dessous de l'intervalle de couple (ΔM) ou
sélectionne un couple de rotation de sortie (Mm) situé immédiatement au-dessus de l'intervalle de couple (ΔM) et amène le convertisseur (26) à appliquer un couple de rotation supplémentaire négatif dans le train d'entraînement.

2. Véhicule hybride doté d'un régulateur de vitesse selon la revendication 1, **caractérisé en ce que** le module de convertisseur (34) est configuré pour commander un convertisseur électromécanique (26).

3. Véhicule hybride doté d'un régulateur de vitesse selon l'une des revendications précédentes, pour véhicules automobiles dotés d'une transmission automatique (12), **caractérisé en ce que** le régulateur de vitesse (20) présente un module de transmission (36) qui modifie le rapport de transmission de la transmission (12) en fonction de la différence entre le couple de rotation de consigne (Ms) et le couple de rotation de sortie (Mm) qui peut être délivré par le moteur (10) à combustion interne.

4. Véhicule hybride doté d'un régulateur de vitesse selon l'une des revendications précédentes, **caractérisé en ce que** le régulateur de vitesse (20) est configuré pour déterminer le couple de rotation de consigne (Ms) en fonction du signal (G) d'une sonde (24) de pédale d'accélération.
